# EUROPEAN PATENT SPECIFICATION

(11) **EP 4 246 605 B1**
(45) Date of publication and mention of the grant of the patent: **02.04.2025**
(21) Application number: 22893193.7
(22) Date of filing: 09.11.2022
(51) Int. Cl.: H01M 4/04, H01M 10/04, H01M 4/139, B05C 1/08

(54) **APPARATUS FOR PRODUCING ELECTRODE AND ELECTRODE ROLL**
VORRICHTUNG ZUR HERSTELLUNG EINER ELEKTRODE UND ELEKTRODENROLLE
APPAREIL DE PRODUCTION D'ÉLECTRODE ET ROULEAU-ÉLECTRODE

(30) Priority: 09.11.2021 KR 20210153117
(43) Date of publication of application: 20.09.2023
(73) Proprietor: LG Energy Solution, Ltd., Seoul 07335 (KR)
(72) Inventor: CHOI, Soon Sik, Daejeon 34122 (KR); KWON, Oh Cheol, Daejeon 34122 (KR); KIM, Ji Hwan, Daejeon 34122 (KR); LEE, Jeongwon, Daejeon 34122 (KR)
(74) Representative: Plasseraud IP
(86) International application number: PCT/KR2022/017554
(87) International publication number: WO 2023/085773

(56) References cited:
- JP-A- 2010 049 906
- KR-A- 20120 031 436
- KR-A- 20160 009 840
- KR-A- 20160 141 448
- KR-A- 20200 059 001
- KR-A- 20210 008 724
- KR-B1- 101 810 146
- US-A1- 2014 308 434

## Description

### [Technical Field]

This application claims priority to and the benefit of Korean Patent Application No. 10-2021-0153117 filed with the Korean Intellectual Property Office on November 9, 2021.

The present specification relates to an electrode manufacturing apparatus and an electrode roll.

### [Background Art]

Recently, prices of energy sources have increased because of the depletion of fossil fuels, and the interest in environmental pollution is increasing. Therefore, there is an increasing demand for environmental-friendly alternative energy sources. Therefore, research on various power production technologies such as nuclear power, solar power, wind power, and tidal power is being continuously conducted. In addition, interest in power storage devices for more efficiently using the produced energy is high.

In particular, as the development of technologies and demands for mobile devices are increased, there is a rapidly increasing demand for batteries as energy sources. Many studies are being conducted on the batteries in order to meet these needs.

Representatively, regarding a shape of the battery, there is a high demand for an angular or pouch-type secondary battery that may have a small thickness and be applied to products such as mobile phones. Regarding a material, there is a high demand for lithium secondary batteries such as lithium-ion batteries or lithium-ion polymer batteries that have advantages such as a high energy density, a discharge voltage, and output stability.

In general, the secondary battery is structured to include an electrode assembly made by stacking a positive electrode, a negative electrode, and a separator positioned between the positive electrode and the negative electrode. The positive and negative electrodes are each manufactured by applying slurry containing an active material onto a current collector. The manufactured electrode is stored in a state of being wound around a bobbin before assembling the battery, and is moved when necessary.

To improve efficiency of an electrode coating process, a single current collector may be coated with a plurality of electrodes and stored by being wound around the bobbin. However, in this case, a portion of the current collector, which is disposed between the electrodes and is not coated with slurry, may be wrinkled. Accordingly, there is a need for a method capable of solving a problem with storage. JP 2010 049906 A, US 2014/308434 A1, and KR 2016 0141448 A are further prior art.

### [Detailed Description of the Invention]

### [Technical Problem]

The present specification is intended to provide an electrode manufacturing apparatus and an electrode roll.

### [Technical Solution]

The invention is defined by the appended claims.

One embodiment of the present specification provides an electrode manufacturing apparatus including: a supply part configured to supply a substrate; a coating part configured to coat at least one surface of the supplied substrate with an electrode layer divided into coated portions coated with electrode slurry and provided in two or more regions spaced apart from one another in a direction perpendicular to a direction in which the substrate is supplied, and a non-coated portion between the coated portions in the two or more regions; a drying part configured to dry the coated electrode layer to manufacture an electrode film; and a recovery part configured to recover the electrode film, in which the recovery part includes: a bobbin around which the electrode film is wound; and a variable ring fitted with the bobbin and configured to be movable in a longitudinal direction of the bobbin, the variable ring being provided to correspond to a position of the non-coated portion.

In an embodiment of the present specification, the variable ring may be an elastic band.

In another embodiment of the present specification, a width of the variable ring may be 0.1 or more times and less than 1 time a width of the non-coated portion.

In yet another embodiment of the present specification, a thickness of the variable ring may be 1 mm or more and 5 mm or less.

In an embodiment of the present specification, the coating part may coat at least one surface of the supplied substrate with the electrode layer divided into the coated portions coated with the electrode slurry and provided in the two regions spaced apart from each other in the direction perpendicular to the direction in which the substrate is supplied, and the non-coated portion between the coated portions in the two regions, and the recovery part may include a single variable ring provided to correspond to a position of the non-coated portion.

In an embodiment of the present specification, the coating part may coat at least one surface of the supplied substrate with the electrode layer divided into the coated portions coated with the electrode slurry and provided in the three regions spaced apart from one another in the direction perpendicular to the direction in which the substrate is supplied, and the two non-coated portions respectively positioned between the coated portions in the three regions, and the recovery part may include two variable rings provided to respectively correspond to positions of the two non-coated portions.

Another embodiment of the present specification provides an electrode roll including: an electrode film including a substrate, and an electrode layer disposed on at least one surface of the substrate and divided into coated portions coated with electrode slurry and provided in two or more regions spaced apart from one another in a longitudinal direction of the substrate, and a non-coated portion provided between the two or more coated portions; a bobbin around which the electrode film is wound; and a variable ring fitted with the bobbin and configured to be movable in a longitudinal direction of the bobbin, the variable ring being provided to correspond to the position of the non-coated portion.

In an embodiment of the present specification, the variable ring may be an elastic band.

In another embodiment of the present specification, a width of the variable ring may be 0.1 or more times and less than 1 time a width of the non-coated portion.

In yet another embodiment of the present specification, a thickness of the variable ring may be 1 mm or more and 5 mm or less.

In an embodiment of the present specification, the electrode layer may be disposed on at least one surface of the substrate and divided into the coated portions disposed in the two regions spaced apart from each other in the longitudinal direction of the substrate, and the non-coated portion provided between the coated portions in the two regions, and the variable ring may be provided to correspond to a position of the non-coated portion.

In an embodiment of the present specification, the electrode layer may be disposed on at least one surface of the substrate and divided into the coated portions provided in the three regions spaced apart from one another in the longitudinal direction of the substrate, and the two non-coated portions respectively provided between the coated portions in the three regions, and the variable rings may be provided to respectively correspond to positions of the two non-coated portions.

### [Advantageous Effects]

An embodiment of the present specification may advantageously reduce wrinkles that may occur between the plurality of electrodes formed on the single substrate.

An embodiment of the present specification may advantageously reduce the thickness difference between the non-coated portion and the coated portion coated with the electrode.

An embodiment of the present specification may advantageously reduce differences in physical characteristics between the non-coated portion and the coated portion coated with the electrode.

### [Brief Description of Drawings]

FIG. 1 is a block diagram illustrating an electrode manufacturing apparatus according to an embodiment of the present specification.
FIG. 2 is a cross-sectional view illustrating the electrode manufacturing apparatus according to an embodiment of the present specification.
FIG. 3A is a perspective view made before a recovery part recovers an electrode film, and FIG. 3B is a perspective view made after the recovery part completely recovers the electrode film.
FIGS. 4A, 4B, and 4C are views respectively illustrating Cases 1 to 3 in which non-coated portions of the electrode film recovered, as illustrated in FIGS. 3A and 3B, are wrinkled.
FIG. 5A is a perspective view made before the recovery part recovers an electrode film having two non-coated portions according to an embodiment of the present specification, and FIG. 5B is a perspective view made before the recovery part recovers an electrode film having a single non-coated portion.
FIG. 6A is a cross-sectional view of a bobbin having a variable ring according to an embodiment of the present specification, FIG. 6B is a cross-sectional view of a bobbin having a variable ring according to another embodiment of the present specification, and FIG. 6C is an enlarged view of a bobbin having a variable ring according to still another embodiment of the present specification.
FIG. 7 is a cross-sectional view illustrating an electrode manufacturing apparatus according to still yet another embodiment of the present specification.
FIG. 8 is a perspective view illustrating a state in which a cutting part is provided according to another embodiment of the present specification.
FIG. 9 is a cross-sectional view illustrating a state in which a cutting part is provided according to another embodiment of the present specification.

### [Explanation of Reference Numerals and Symbols]

10: Substrate
20: Electrode layer
21: Coated portion
22: Non-coated portion
23: Edge portion
30: Electrode film
100: Supply part
200: Coating part
300: Drying part
400, 400': Recovery part
410: Bobbin
420: Variable ring
420': First variable ring
420": Second variable ring
500: Electrode manufacturing apparatus
600: Cutting part
610: Upper knife
650: Lower knife
611, 651: Knife wheel
612, 652: Housing

### [Detailed Description]

Hereinafter, embodiments of the present invention will be described in detail with reference to the drawings. However, the drawings are intended to illustratively describe the present invention, and the scope of the present invention is not limited by the drawings.

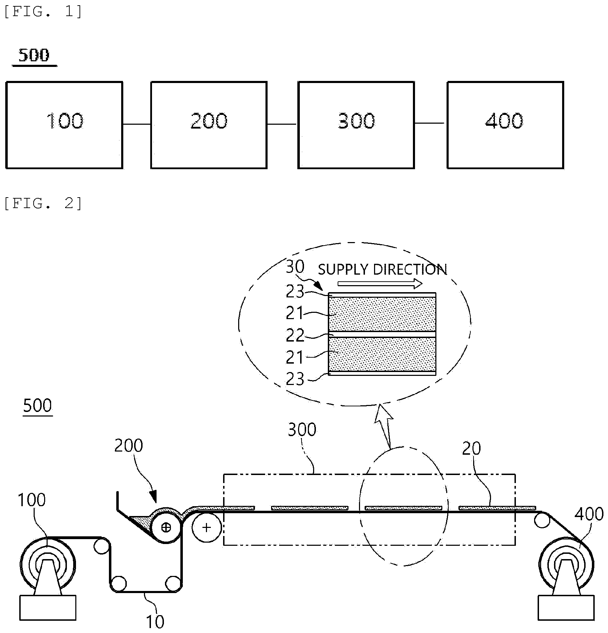

FIG. 1 is a block diagram illustrating an electrode manufacturing apparatus 500 according to an embodiment of the present specification, and FIG. 2 is a cross-sectional view illustrating the electrode manufacturing apparatus 500 according to an embodiment of the present specification. The electrode manufacturing apparatus 500 includes a supply part 100, a coating part 200, a drying part 300, and a recovery part 400.

The recovery part 400 includes: a bobbin 410 around which the electrode film 30 is wound; and a variable ring fitted with the bobbin 410 and configured to be movable in a longitudinal direction of the bobbin 410, the variable ring being provided to correspond to a position of a non-coated portion 22 provided between coated portions 21 of an electrode film that are coated with electrode slurry.

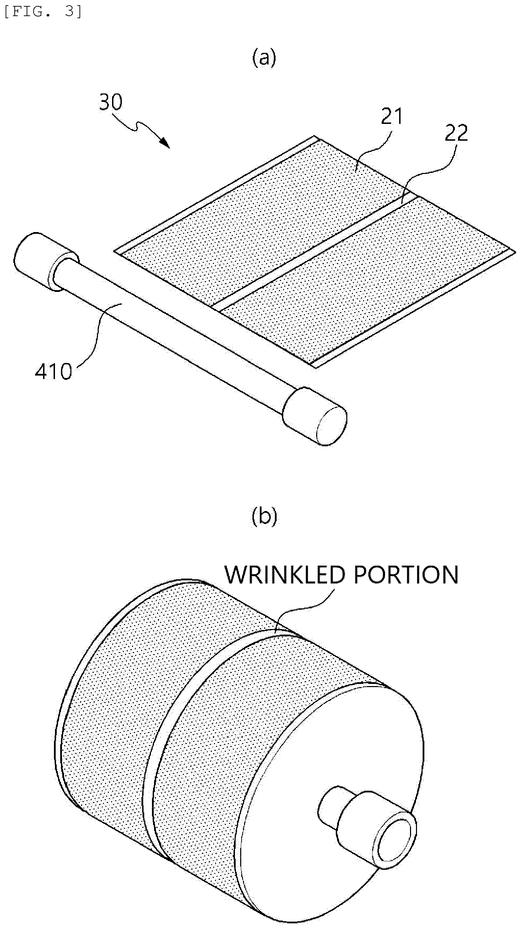

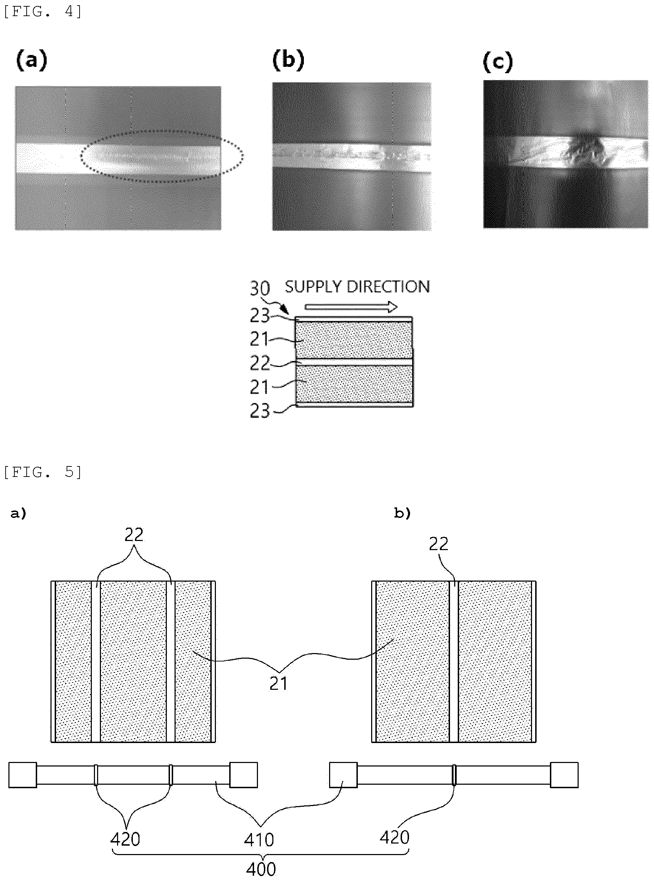

As illustrated in FIG. 3A, in case that an electrode film 30, which has a non-coated portion 22 provided between coated portions coated with electrode slurry, is wound around a bobbin having no variable ring, the indicated portion, i.e., the non-coated portion is wrinkled after a winding operation is completed, as illustrated in FIG. 3B, as in Cases 1 to 3 illustrated in FIGS. 4A to 4C. When the coated electrode is dried and then finally wound, the non-coated portion, which is mainly disposed at a center of the electrode, is wrinkled because of a thickness difference between the coated portion and the non-coated portion. A degree to which the wrinkle is formed increases as a thickness of a foil, which is a substrate, decreases, the amount of coating on the electrode relatively increases, and a thickness of the coated portion increases.

In contrast, as illustrated in FIG. 5, in case that a variable ring 420 is provided to correspond to a position of the non-coated portion 22 provided between the coated portions 21 of the electrode film that are coated with the electrode slurry, a level difference between the non-coated portion 22 and the coated portion 21 coated with the electrode decreases, thereby reducing the occurrence of wrinkles.

The variable ring 420 may be a ring made of an elastic material, specifically, an elastic band. The material is not particularly limited as long as the material has appropriate rubber elasticity and mechanical strength, excellent wear resistance, and a small frictional coefficient. Rubber such as urethane rubber, natural rubber, acrylic rubber, or the like may be used as the material. In this case, the variable ring 420 provides an elastic force, such that the variable ring 420 may be easily moved in accordance with a position of the non-coated portion 22 of the electrode film, which is a recovery target, and the variable ring 420 is positioned to be in close contact with a surface of a bobbin after being moved, such that a designated position is not easily changed during the process. In addition, the variable ring may be deformed in shape by a force. Therefore, even though the amount of force applied to a center of the bobbin is increased by the electrode film wound in multiple layers, the variable ring may cope with the increase in force while being appropriately deformed in shape.

A width W of the variable ring 420 may be 0.1 or more times and less than 1 time, 0.2 or more times and less than 1 time, 0.3 or more times and less than 1 time, 0.4 or more times and less than 1 time, 0.5 or more times and less than 1 time, 0.6 or more times and less than 1 time, 0.7 or more times and less than 1 time, 0.8 or more times and less than 1 time, or 0.9 or more times and less than 1 time a width of the non-coated portion 22. A width of the variable ring 420 may be almost equal to a width of the non-coated portion 22. However, in case that the width of the variable ring 420 is equal to or larger than the width of the non-coated portion 22, the variable ring 420 may come into contact with an edge of the coated portion 21 and deform the coated portion 21. When the above-mentioned range is satisfied, the width of the variable ring 420 compensates for a level difference from the coated portion 21 without deforming the coated portion 21.

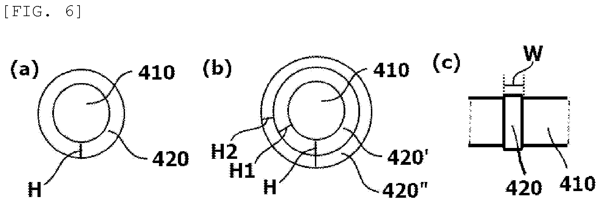

A thickness H of the variable ring 420 may be selected in consideration of a height of the coated portion 21. Specifically, the thickness H of the variable ring 420 may be 1 mm or more and 10 mm or less, or 1 mm or more and 5 mm or less. In this case, the thickness H of the variable ring may be implemented by the single variable ring, as illustrated in FIG. 6A. Alternatively, as illustrated in FIG. 6B, the target thickness H (H=H1+H2) of the variable ring may be implemented by stacking two or more variable rings, i.e., stacking a first variable ring 420' having a thickness of H1 and a second variable ring 420" having a thickness of H2.

A shape of the bobbin 410 is not particularly limited as long as the electrode film may be stored or moved in a state of being wound around the bobbin 410. The bobbin 410 may have a cylindrical shape.

The bobbin 410 may have a shape similar to a shape of a spool. In this case, a central portion of the bobbin 410 around which the electrode film 30 is wound has a constant diameter, and two opposite ends of the bobbin 410 each have a larger diameter than the central portion of the bobbin 410, which makes it possible to prevent the electrode film 30 wound around the central portion of the bobbin 410 from being separated toward the two opposite ends of the bobbin 410.

A length of the bobbin 410 is not particularly limited as long as the length of the bobbin 410 is larger than a width of the electrode film 30 and there is no problem occurring when the electrode film 30 is stored.

A diameter of the bobbin 410 is not particularly limited as long as the bobbin 410 may withstand a physical force applied by the wound electrode film 30 when the electrode film 30 is stored.

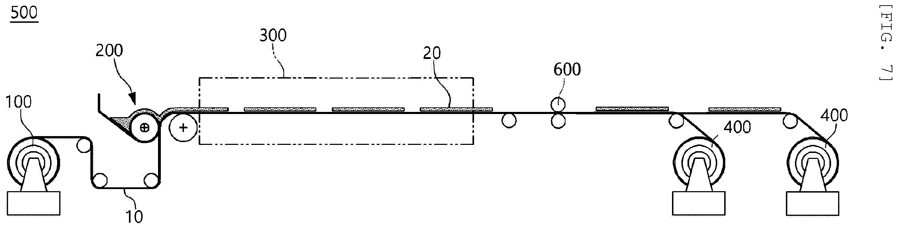

FIG. 7 is a cross-sectional view illustrating an electrode manufacturing apparatus according to still yet another embodiment of the present specification. The electrode manufacturing apparatus 500 further includes a cutting part 600 in addition to the supply part 100, the coating part 200, the drying part 300, and the recovery part 400.

The cutting part 600 has a cutter. The cutter may separate a manufactured electrode into two or more pieces by cutting the non-coated portion in a supply direction. The recovery parts 400 may be provided to correspond in number to the two or more electrodes separated as described above.

A facility for manufacturing the electrode having a large width of 1000 mm or more, 1100 mm or more, or 1200 mm or more is advantageous in mass-producing the electrode. However, in case that the single recovery part 400 is provided to correspond in width to the manufactured electrode having a large width, the number of non-coated portions is inevitably increased in a direction perpendicular to the supply direction, and the number of defects is inevitably increased because of a thickness difference between the coated portion and the non-coated portion.

Before the manufactured electrode having a large width is wound around the recovery part 400 at a distal end of the facility, the cutting part 600 cuts the manufactured electrode having a large width into a width that may allow the variable ring 420 provided on the recovery part 400 to control a defect caused by a thickness difference between the coated portion and the non-coated portion. The plurality of recovery parts 400 may be provided to correspond in number to the cut electrodes.

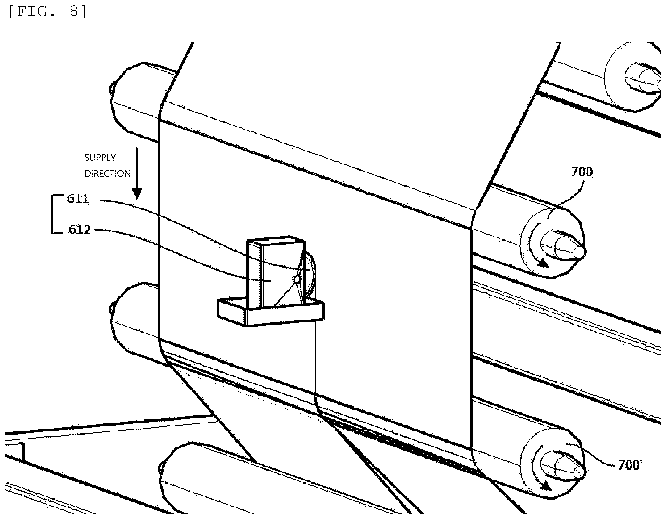

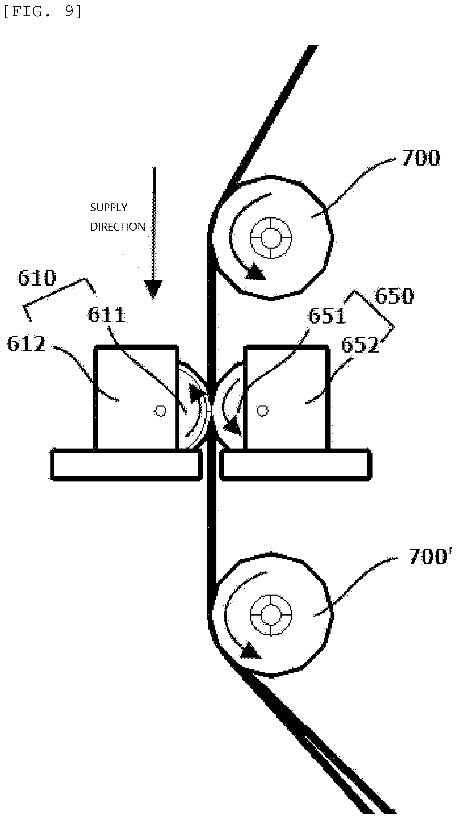

FIG. 8 is a perspective view illustrating a state in which the cutting part 600 is provided according to another embodiment of the present specification, and FIG. 9 is a cross-sectional view illustrating a state in which the cutting part 600 is provided according to another embodiment of the present specification.

The cutting part 600 may have two knife wheels 611 and 651 that may cut the electrode while rotating when the electrode moves between the two knife wheels 611 and 651. The cutting part 600 may include a lower knife 650 provided below the substrate 10, and an upper knife 610 provided above the substrate 10. The upper knife 610 and the lower knife 650 may respectively include the knife wheel 611 and 651, and housings 612 and 652 into which the knife wheel is respectively inserted and fixed.

Any one of the two knife wheels 611 and 651 may rotate in the same rotation direction as adjacent guide rolls 700 and 700', and the other of the two knife wheels 611 and 651 may rotate in a direction opposite to the rotation direction of the adjacent guide rolls 700 and 700'.

The rotation directions of the two knife wheels 611 and 651 may be different from each other, but the rotational speeds of the two knife wheels 611 and 651 may be equal to each other. More specifically, the rotational speeds of the two knife wheels 611 and 651 may each be equal to a rotational speed of each of the guide rolls 700 and 700'.

The supply part 100 serves to supply the substrate 10. The configuration for supplying the substrate is not particularly limited as long as the supply part 100 may supply the substrate 10. The supply part 100 may supply the substrate 10 by unwinding the substrate 10 from a roll around which the substrate 10 is wound.

In this case, the substrate 10 is not particularly limited as long as the substrate may be coated with electrode slurry. The substrate 10 may be a current collector, specifically, a metal foil. The substrate may be a foil made of copper, aluminum, or a combination thereof.

The coating part 200 coats at least one surface of the supplied substrate 10 with the electrode layer divided into the coated portions 21 coated with the electrode slurry and provided in two or more regions spaced apart from one another in the direction perpendicular to the direction in which the substrate 10 is supplied, and the non-coated portions 22 disposed between the coated portions provided in the two or more regions.

A method of coating electrode slurry by the coating part 200 is not particularly limited. A general method of applying electrode slurry using a slot die, a blade, comma coating, or the like may be selected and changed, as necessary.

The electrode slurry, which is to be coated by the coating part 200, may include an electrode active material, a binder, and a solvent.

The electrode active material is not particularly limited as long as the electrode active material is a material used for a positive electrode or a negative electrode of a battery. The electrode active material may be a cobalt-based active material, a ternary active material, a nickel-based active material, a manganese-based active material, a phosphoric acid-based active material, or the like.

The binder is not particularly limited as long as the binder may coagulate the electrode active material. The binder may be polyvinylidene fluoride, styrene-butadiene rubber (SBR), or the like.

The solvent is not particularly limited as long as the solvent may provide fluidity to the electrode slurry. The solvent may be water, N-methyl pyrrolidone, or the like.

The drying part 300 removes the solvent in the coated electrode slurry by drying the coated electrode layer.

A drying means of the drying part 300 is not particularly limited. However, the drying means of the drying part 300 may be selected in accordance with characteristics of the electrode slurry that is a target to be dried. At least one of hot blast, a heater, and UV irradiation may be selected.

A drying temperature and time of the drying part 300 are not particularly limited. However, the drying temperature and time of the drying part 300 may be adjusted depending on characteristics of the electrode slurry that is a target to be dried. For example, the electrode slurry may be dried at a temperature of about 200°C or less for 20 seconds to 5 minutes.

In an embodiment, as illustrated in FIG. 5B, the coating part 200 may coat at least one surface of the supplied substrate with the electrode layer 20 divided into the coated portions 21 coated with the electrode slurry and provided in the two regions spaced apart from each other in the direction perpendicular to the direction in which the substrate is supplied, and the non-coated portion 22 disposed between the coated portions in the two regions. The recovery part 400 may include the single variable ring 420 provided to correspond to the position of the non-coated portion 22.

In another embodiment, as illustrated in FIG. 5A, the coating part 200 may coat at least one surface of the supplied substrate with the electrode layer 20 divided into the coated portions 21 coated with the electrode slurry and provided in the three regions spaced apart from one another in the direction in which the substrate is supplied, and the two non-coated portions 22 positioned between the coated portions provided in the three regions. The recovery part 400 may include the two variable rings 420 provided to correspond to the positions of the two non-coated portions.

Still another embodiment of the present specification provides an electrode roll including: an electrode film including a substrate, and an electrode layer disposed on at least one surface of the substrate and divided into coated portions coated with electrode slurry and provided in two or more regions spaced apart from one another in a longitudinal direction (supply direction) of the substrate, and non-coated portions provided between the two or more coated portions; a bobbin around which the electrode film is wound; and a variable ring fitted with the bobbin and configured to be movable in a longitudinal direction of the bobbin, the variable ring being provided to correspond to the position of the non-coated portion.

In this case, the description of the electrode roll may be replaced with the description of the electrode manufacturing apparatus.

In an embodiment, as illustrated in FIG. 5B, the electrode layer 20 may be disposed on at least one surface of the substrate and divided into the coated portions 21 provided in the two regions spaced apart from each other in the longitudinal direction of the substrate, and the non-coated portion 22 provided between the coated portion provided in the two regions. The variable ring 420 may be provided to correspond to the position of the non-coated portion 22.

In another embodiment, as illustrated in FIG. 5A, the electrode layer 20 may be disposed on at least one surface of the substrate and divided into the coated portions 21 provided in three regions spaced apart from one another in the longitudinal direction of the substrate, and the two non-coated portions 22 provided between the coated portions in the three regions. The variable rings 420 may be provided to respectively correspond to the positions of the two non-coated portions 22.

It should be understood that the above-described embodiments are illustrative in all aspects and do not limit the present invention. The scope of the present invention is defined by the claims rather than the detailed description, and it should be interpreted that the meaning and scope of the claims and various embodiments derived from the equivalent concepts thereto fall within the scope of the present invention.

## Claims

1. An electrode manufacturing apparatus (500) comprising:
a supply part (100) configured to supply a substrate (10);
a coating part (200) configured to coat at least one surface of the supplied substrate (10) with an electrode layer (20) divided into coated portions (21), wherein the coated portions (21) are coated with an electrode slurry positioned in two or more regions spaced apart from one another in a direction perpendicular to a direction in which the substrate (10) is supplied, and a non-coated portion (22) positioned between the coated portions (21);
a drying part (300) configured to dry the electrode slurry to manufacture an electrode film (30); and
a recovery part (400) configured to recover the electrode film (30),
**characterised in that**
the recovery part (400) comprises:
a bobbin (410) around which the electrode film (30) is wound; and
a variable ring (420) fitted with the bobbin (410) and configured to be movable in a longitudinal direction of the bobbin (410), the variable ring (420) positioned to correspond to a position of the non-coated portion (22).

2. The electrode manufacturing apparatus (500) of claim 1, wherein the variable ring (420) is an elastic band.

3. The electrode manufacturing apparatus (500) of claim 1, wherein a width of the variable ring (420) is 0.1 or more times and less than 1 time a width of the non-coated portion (22).

4. The electrode manufacturing apparatus (500) of claim 1, wherein a thickness of the variable ring (420) is 1 mm to 5 mm.

5. The electrode manufacturing apparatus (500) of claim 1, wherein the electrode layer (20) is divided into two regions spaced apart from each other and
wherein the recovery part (400) comprises a single variable ring (420) corresponding to the non-coated portion (22) disposed therebetween.

6. The electrode manufacturing apparatus (500) of claim 1, wherein the electrode slurry is coated in three regions spaced apart from one another with two non-coated portions (22) positioned therebetween, and
wherein the recovery part (400) comprises two variable rings (420) positioned to correspond to positions of the two non-coated portions (22).

7. An electrode roll comprising:
an electrode film (30) comprising a substrate (10), and an electrode layer (20) disposed on at least one surface of the substrate (10) and divided into coated portions (21), wherein the coated portions (21) are coated with an electrode slurry positioned in two or more regions spaced apart from one another in a direction perpendicular to a longitudinal direction of the substrate (10), and a non-coated portion (22) positioned between two coated portions (21),
**characterised in that** the electrode roll further comprises
a bobbin (410) around which the electrode film (30) is wound; and
a variable ring (420) fitted with the bobbin (410) and configured to be movable in a longitudinal direction of the bobbin (410), the variable ring (420) positioned to correspond to the position of the non-coated portion (22).

8. The electrode roll of claim 7, wherein the variable ring (420) is an elastic band.

9. The electrode roll of claim 7, wherein a width of the variable ring (420) is 0.1 or more times and less than 1 time a width of the non-coated portion (22).

10. The electrode roll of claim 7, wherein a thickness of the variable ring (420) is 1 mm to 5 mm.

11. The electrode roll of claim 7, wherein the coated portions (21) are disposed in two regions spaced apart from each other in the direction perpendicular to the longitudinal direction of the substrate (10) having the non-coated portion (22) disposed therebetween.

12. The electrode roll of claim 7, wherein the coated portions (21) are positioned in three regions in the direction perpendicular to the longitudinal direction of the substrate (10) with two non-coated portions (22) positioned therebetween, and
wherein two variable rings (420) are positioned to correspond to positions of the two non-coated portions (22).

## Patentansprüche

1. Elektrodenherstellungsvorrichtung (500), welche aufweist:
ein Zuführteil (100), das konfiguriert ist, um ein Substrat (10) zuzuführen;
ein Beschichtungsteil (200), das konfiguriert ist, um zumindest eine Oberfläche des zugeführten Substrats (10) mit einer Elektrodenlage (20) zu beschichten, die unterteilt ist in beschichtete Abschnitte (21), wobei die beschichteten Abschnitte (21) mit einer Elektrodenschlämme beschichtet werden, die an zwei oder mehr Regionen positioniert sind, die in einer Richtung orthogonal zu einer Richtung, in der das Substrat (10) zugeführt wird, mit Abstand voneinander angeordnet sind, sowie einen nichtbeschichteten Abschnitt (22), der zwischen den beschichteten Abschnitten (21) positioniert ist;
ein Trocknungsteil (300), das konfiguriert ist, um die Elektrodenschlämme zur Herstellung eines Elektrodenfilms (30) zu trocknen; und
ein Zurückgewinnungsteil (400), das konfiguriert ist, um den Elektrodenfilm (30) zurückzugewinnen,
**dadurch gekennzeichnet, dass** das Zurückgewinnungsteil (400) aufweist: eine Spule (410), um die der Elektrodenfilm (30) gewickelt wird; und einen variablen Ring (420), der mit der Spule (410) ausgestattet und so konfiguriert ist, dass er in einer Längsrichtung der Spule (410) bewegbar ist, wobei der variable Ring (420) entsprechend einer Position des nichtbeschichteten Abschnitts (22) positioniert ist.

2. Die Elektrodenherstellungsvorrichtung (500) von Anspruch 1,
wobei der variable Ring (420) ein elastisches Band ist.

3. Die Elektrodenherstellungsvorrichtung (500) von Anspruch 1, wobei eine Breite des variablen Rings (420) das 0,1- oder mehrfache und weniger als das 1-fache einer Breite des nichtbeschichteten Abschnitts (22) ist.

4. Die Elektrodenherstellungsvorrichtung (500) von Anspruch 1, wobei eine Dicke des variablen Rings (420) 1 mm bis 5 mm beträgt.

5. Die Elektrodenherstellungsvorrichtung (500) von Anspruch 1, wobei die Elektrodenlage (20) in zwei mit Abstand voneinander angeordnete Regionen unterteilt ist, und
wobei das Zurückgewinnungsteil (400) einen einzigen variablen Ring (420) aufweist, der dem dazwischen angeordneten nichtbeschichteten Abschnitt (22) entspricht.

6. Die Elektrodenherstellungsvorrichtung (500) von Anspruch 1, wobei die Elektrodenschlämme in drei Regionen geschichtet wird, die mit zwei dazwischen positionierten nichtbeschichteten Abschnitten (22) mit Abstand voneinander angeordnet sind, und
wobei das Zurückgewinnungsteil (400) zwei variable Ringe (420) aufweist, die so positioniert sind, dass sie Positionen der beiden nichtbeschichteten Abschnitte (22) entsprechen.

7. Elektrodenrolle, welche aufweist:
einen Elektrodenfilm (30), der ein Substrat (10) aufweist, sowie eine Elektrodenlage (20), die auf zumindest einer Oberfläche des Substrats (10) angeordnet und unterteilt ist in beschichtete Abschnitte (21), wobei die beschichteten Abschnitte (21) mit einer Elektrodenschlämme beschichtet werden, die in zwei oder mehr Regionen positioniert sind, die in Längsrichtung des Substrats (10) mit Abstand voneinander angeordnet sind, sowie einen nichtbeschichteten Abschnitt (22), der zwischen zwei beschichteten Abschnitten (21) positioniert ist;
**dadurch gekennzeichnet, dass** die Elektrodenrolle ferner aufweist:
eine Spule (410), um die der Elektrodenfilm (30) gewickelt wird; und
einen variablen Ring (420), der mit der Spule (410) ausgestattet und so konfiguriert ist, dass er in einer Längsrichtung der Spule (410) bewegbar ist, wobei der variable Ring (420) entsprechend einer Position des nichtbeschichteten Abschnitts (22) positioniert ist.

8. Die Elektrodenrolle von Anspruch 7, wobei der variable Ring (420) ein elastisches Band ist.

9. Die Elektrodenrolle von Anspruch 7, wobei eine Breite des variablen Rings (420) das 0,1- oder mehrfache und weniger als das 1-fache einer Breite des nichtbeschichteten Abschnitts (22) ist.

10. Die Elektrodenrolle von Anspruch 7, wobei eine Dicke des variablen Rings (420) 1 mm bis 5 mm beträgt.

11. Die Elektrodenrolle von Anspruch 7, wobei die beschichteten Abschnitte (21) in zwei Regionen angeordnet sind, die in der Längsrichtung des Substrats (10), mit dem dazwischen positionierten nichtbeschichteten Abschnitt (22), mit Abstand voneinander angeordnet sind.

12. Die Elektrodenrolle von Anspruch 7, wobei die beschichteten Abschnitte (21) in drei Regionen in der Längsrichtung des Substrats (10) mit zwei dazwischen positionierten nichtbeschichteten Abschnitten (22) angeordnet sind, und
wobei zwei variable Ringe (420) so positioniert sind, dass sie den Positionen der zwei nichtbeschichteten Abschnitte (22) entsprechen.

## Revendications

1. Appareil de fabrication d'électrode (500) comprenant :
une partie d'apport (100) configurée pour apporter un substrat (10) ;
une partie d'enduction (200) configurée pour enduire au moins une surface du substrat (10) apporté avec une couche d'électrode (20) divisée en parties enduites (21), dans lequel les parties enduites (21) sont enduites avec une suspension d'électrode positionnée dans deux régions ou plus espacées les unes des autres dans une direction perpendiculaire à une direction dans laquelle le substrat (10) est apporté, et une partie non enduite (22) positionnée entre les parties enduites (21) ;
une partie de séchage (300) configurée pour sécher la suspension d'électrode pour fabriquer un film d'électrode (30) ; et
une partie de récupération (400) configurée pour récupérer le film d'électrode (30),
**caractérisé en ce que**
la partie de récupération (400) comprend :
une bobine (410) autour de laquelle le film d'électrode (30) est enroulé ; et
une bague variable (420) montée sur la bobine (410) et configurée pour être mobile dans une direction longitudinale de la bobine (410), la bague variable (420) étant positionnée pour correspondre à une position de la partie non enduite (22).

2. Appareil de fabrication d'électrode (500) selon la revendication 1, dans lequel la bague variable (420) est une bande élastique.

3. Appareil de fabrication d'électrode (500) selon la revendication 1, dans lequel une largeur de la bague variable (420) est de 0,1 fois ou plus et de moins de 1 fois une largeur de la partie non enduite (22).

4. Appareil de fabrication d'électrode (500) selon la revendication 1, dans lequel une épaisseur de la bague variable (420) est de 1 mm à 5 mm.

5. Appareil de fabrication d'électrode (500) selon la revendication 1, dans lequel la couche d'électrode (20) est divisée en deux régions espacées l'une de l'autre et
dans lequel la partie de récupération (400) comprend une unique bague variable (420) correspondant à la partie non enduite (22) disposée entre elles.

6. Appareil de fabrication d'électrode (500) selon la revendication 1, dans lequel la suspension d'électrode est enduite dans trois régions espacées les unes des autres avec deux parties non enduites (22) positionnées entre elles, et
dans lequel la partie de récupération (400) comprend deux bagues variables (420) positionnées pour correspondre aux positions des deux parties non enduites (22).

7. Rouleau d'électrode comprenant :
un film d'électrode (30) comprenant un substrat (10), et une couche d'électrode (20) disposée sur au moins une surface du substrat (10) et divisée en parties enduites (21), dans lequel les parties enduites (21) sont enduites avec une suspension d'électrode positionnée dans deux régions ou plus espacées les unes des autres dans une direction longitudinale du substrat (10), et une partie non enduite (22) positionnée entre deux parties enduites (21),
**caractérisé en ce que** le rouleau d'électrode comprend en outre :
une bobine (410) autour de laquelle le film d'électrode (30) est enroulé ; et
une bague variable (420) montée sur la bobine (410) et configurée pour être mobile dans une direction longitudinale de la bobine (410), la bague variable (420) étant positionnée pour correspondre à la position de la partie non enduite (22).

8. Rouleau d'électrode selon la revendication 7, dans lequel la bague variable (420) est une bande élastique.

9. Rouleau d'électrode selon la revendication 7, dans lequel une largeur de la bague variable (420) est de 0,1 fois ou plus et de moins de 1 fois une largeur de la partie non enduite (22).

10. Rouleau d'électrode selon la revendication 7, dans lequel une épaisseur de la bague variable (420) est de 1 mm à 5 mm.

11. Rouleau d'électrode selon la revendication 7, dans lequel les parties enduites (21) sont disposées dans deux régions espacées l'une de l'autre dans la direction longitudinale du substrat (10) ayant la partie non enduite (22) disposée entre elles.

12. Rouleau d'électrode selon la revendication 7, dans lequel les parties enduites (21) sont positionnées dans trois régions dans la direction longitudinale du substrat (10) avec deux parties non enduites (22) positionnées entre elles, et
dans lequel deux bagues variables (420) sont positionnées pour correspondre aux positions des deux parties non enduites (22).
